# EUROPEAN PATENT SPECIFICATION

(11) **EP 3 715 139 B1**
(45) Date of publication and mention of the grant of the patent: **25.10.2023**
(21) Application number: 17936709.9
(22) Date of filing: 26.12.2017
(51) Int. Cl.: B44C 1/175, C09D 175/04, C09D 11/102, B41M 7/00, B41M 5/00, B41M 5/025, B32B 5/16, B41M 1/12, B41M 5/04, B41M 5/382, C09D 11/54

(54) **ENVIRONMENT-FRIENDLY WATER TRANSFER PRINTING PROCESS AND CORRESPONDING COMPONENT SURFACE STRUCTURE**
UMWELTFREUNDLICHES WASSERÜBERTRAGUNGSDRUCKVERFAHREN UND ENTSPRECHENDE BAUTEILOBERFLÄCHENSTRUKTUR
PROCÉDÉ D'IMPRESSION PAR TRANSFERT D'EAU RESPECTUEUX DE L'ENVIRONNEMENT ET STRUCTURE DE SURFACE DE COMPOSANT CORRESPONDANTE

(30) Priority: 25.12.2017 CN 201711416645
(43) Date of publication of application: 30.09.2020
(73) Proprietor: Kunshan Ren Quan Laser Technology Co., Ltd., Kunshan Suzhou, Jiangsu 215321 (CN)
(72) Inventor: CAI, Shiquan, Suzhou, Jiangsu 215321 (CN)
(74) Representative: Stolmár & Partner Patentanwälte PartG mbB
(86) International application number: PCT/CN2017/118565
(87) International publication number: WO 2019/127000

(56) References cited:
- WO-A1-2017/162475
- CN-A- 102 765 287
- CN-A- 102 975 507
- CN-A- 106 079 952
- CN-A- 107 446 105
- JP-A- H10 277 479
- US-A1- 2004 014 880
- US-A1- 2011 265 953
- US-B2- 6 953 511

## Description

### FIELD OF THE INVENTION

The present invention relates an environmentally friendly water transfer printing method and corresponding surface structure of a component.

### BACKGROUND

In order to increase the aesthetics of an object or other actual needs, the surface of the object needs to be decorated. At present, water transfer printing technology is usually used to decorate the surface of objects with complex and changeable three-dimensional structures or curved objects. In the process of water transfer printing, a large amount of VOC will be generated due to the use of activator, which pollutes the environment and does not comply with the relevant environmental protection regulations. Therefore, it is necessary to provide a simple and effective water transfer printing process to solve the problems of the prior art water transfer printing process that a large amount of VOC discharge and are not environmentally friendly.

US 2011/265953 A1 discloses a personal water transfer imaging process kit for application of an image to an object. A pre-printed film having an image thereon is suspended within a vat of water to hydrate the ink after which it is activated. The object is submerged into the vat containing the hydrated and activated ink to generate pressure against the object and cause transfer the ink image onto the object. Primer, base coat, top coat, activator, film and supporting supplies are all supplied within the self-contained kit. The primer coating material, base coating material, activator material and top coat material are the form of a hand held aerosol propellant or pump actuator devices. The kit components are efficiently packaged within a cardboard tube provided with protective clear outer skin. The sensitive image transfer film and supporting components are thereby protected from moisture, dirt and damage while in the tube.

WO 2017/162475 A1 discloses a method of forming a multilayer coating film comprising a step of coating, onto an object to be coated, a water-based primer coating composition, a step of wet-on-wet coating a 1st water-based coloring coating composition, a step of wet-on-wet coating a 2nd water-based coloring coating composition, a step of coating a clear coating composition, and a step of simultaneous hardening of the formed multilayer coating film, wherein (1) the water-based primer coating composition contains (A) a water-based polyolefin resin with a melting point of 60-100°C and a weight average molecular weight in the range of 50,000-250,000, (B) a water-based polyurethane resin having a glass transition temperature (Tg) of -100 to -70°C and an elongation rate of 500% or more, (C) a curing agent, and (D) conductive carbon, (2) the 1st water-based coloring coating composition and 2nd water-based coloring coating composition, each, as base resins, contain a core/shell-type emulsion comprising an acrylic resin core portion and a polyurethane resin shell portion, (3) the clear coating composition contains a hydroxy- group-containing acrylic resin and a polyisocyanate compound.

### SUMMARY OF THE INVENTION

The purpose of the present invention is to overcome the above-mentioned shortcomings of the prior art, and to provide a simple and effective environmentally friendly water transfer printing method and corresponding surface structure of a component with no VOC discharge.

The object underlying the present invention is solved by an environmentally friendly water transfer printing method according to claim 1 and a surface structure of a component printed with such printing method according to claim 9. Further developments of the invention are set out in the dependent claims.

In order to achieve the above purpose, the environmentally friendly water transfer printing method of the present invention is as follows: comprising:
Applying water-based primer to a surface of a subject;
Using a water transfer printing membrane comprising a modified water-based ink multi-color printing pattern, so that a water-soluble film of the water transfer printing membrane absorbs water and dissolves to swell the modified water-based ink, and the water-based primer is combined with the modified water-based ink to make the surface of the object attach a pattern.

Preferably the modified water-based ink is modified polyurethane comprising hydroxyl, sulfonate and isocyanate groups, and the water-based primer is modified polyurethane comprising hydroxyl and isocyanate groups.

Preferably, the environmentally friendly water transfer printing method, further comprising: Performing the water transfer printing on the object, and the water-based primer on the surface of the object is combined with the water transfer printing membrane with a multi-color water-based ink printing pattern to make the surface of the object attach a pattern.

Preferably the modified water-based ink is modified polyurethane comprising hydroxyl, sulfonate and isocyanate groups, and the water-based primer is modified polyurethane comprising hydroxyl and isocyanate groups.

The water transfer printing membrane with a multi-color water-based ink printing pattern comprising:
A water-soluble film;
A multi-color water-based ink printing pattern formed on the water-soluble film; and
A metal nanoparticle layer formed on the multi-color water-based ink printing pattern.

Preferably the method further comprising: cleaning the surface of the object to which the pattern is attached, then blowing and baking the surface of the object.

Preferably the method further comprising: spraying protective paint and/or topcoat on the surface of the object after baking.

Preferably, the environmentally friendly water transfer printing method, further comprising steps:
(1): Pre-treatment of a surface of an object;
(2): Applying water-based primer to the surface of the object;
(3): Placing a water transfer printing membrane with a multi-color water-based ink printing pattern on a water surface, and performing the water transfer printing on the object to make the surface of the object attach a pattern.

Preferably a water temperature during the water transfer printing in the step (3) is 25°C to 30°C.

Preferably the method further comprising steps:
(4): soaking the surface of the object with hot water for 5 minutes, in which the water temperature is between 45°C and 50°C;
(5): Cleaning with water under pressure and blow off the surface water stains;
(6): Drying the object above 50°C until the water completely evaporates;
(7): Spraying protective paint and/or topcoat.

The present application provides a surface structure of a component, comprising a primer layer, a multi-color water-based ink printing pattern layer, and a metal nanoparticle layer which are sequentially arranged on a surface of the component.

Preferably the structure further comprising a protective paint layer provided on an outer surface of the metal nanoparticle layer.

Preferably the primer layer is a water-based primer layer.

Preferably the surface of the component has a regular geometric profile or an irregular stereoscopic curved surface.

The environmentally friendly water transfer printing method and a corresponding surface structure of a component according to the present invention, wherein modified water-based ink is used in the water transfer printing membrane during the water transfer printing, so that the water-soluble film absorbs water and the modified water-based ink swells to a transferable state, then the water transfer printing membrane can be combined with the primer on the surface of the subject to make the attachment stronger. No activator, which is a mixed solvent of multiple solvents or multiple mixed solvents, is used during the method, so there is no VOC discharge.

### DETAILED DESCRIPTION

In order to be able to understand the technical content of the present invention more clearly, the following embodiments are specifically described.

The environmentally friendly water transfer printing method of the present invention comprising:
Applying water-based primer to a surface of a subject;
Using a water transfer printing membrane comprising a modified water-based ink multi-color printing pattern, so that a water-soluble film of the water transfer printing membrane absorbs water and dissolves to swell the modified water-based ink, and the water-based primer is combined with the modified water-based ink to make the surface of the object attach a pattern.

In a preferred embodiment, the modified water-based ink is modified polyurethane comprising hydroxyl, sulfonate and isocyanate groups, and the water-based primer is modified polyurethane comprising hydroxyl and isocyanate groups.

Modified water-based ink can be selected from acrylic ester modified waterborne polyurethane emulsion. Hydroxyl and sulfonate groups are used as the hydrophilic group of water-based polyurethane emulsion. The sulfonate group -SO₃R in the chemical structure is extremely water-soluble, so it will dissolve instantly when encountering water during water transfer printing, and it can be biodegraded, which is environmentally friendly. Control the amount of sulfonate group -SO₃R in the modified water-based ink until the water-based ink swells with water and dissolves slightly.

When the modified water-based ink meets water, due to the presence of good water-soluble sodium sulfonate in the chemical structure, the water-based ink swells in a short time; after water transfer printing, the water-based ink is combined with the water-based primer by physical adsorption and chemical bonding. In the above acrylic ester-modified water-based polyurethane emulsion, hydroxyethyl methacrylate can be selected for modification to make the entire product structure contain hydroxyl groups.

Physical adsorption: The attachment of the water-based primer to the substrate is generated by the van der Waals force between the -OH in the emulsion structure and the substrate. The combination of the water-based ink film and the water-based primer achieves the bonding effect through physical adsorption. The bonding effect depends on the wettability. By wetting, the water-based ink and the substrate are in close contact, and the bonding interface will form a huge intermolecular force. Affected by the hydroxyl groups in the water-based ink, the higher the hydroxyl groups content, the closer the contact with the primer, the stronger the intermolecular force formed, and the better the bonding effect.

Chemical bond theory: chemical bonds include ionic bonds, covalent bonds and metal bonds. Acrylate modified water-based polyurethane adhesives in water-based ink and water-based polyurethane adhesive water-based primers are highly prone to chemical reactions between molecules to produce high-strength chemical bonds, mainly ionic bonds and covalent bonds. The water-based ink contains hydroxyl groups, which easily react with -NCO in water-based primer:

R-OH+R'-NCO →ROCONHR'

In addition, each of the primer, topcoat, and water-based ink multi-color printing pattern layer may comprise isocyanate groups R'-NCO, hydroxyl, and other groups.

Preferably, the environmentally friendly water transfer printing method, further comprising: Performing the water transfer printing on the object, and the water-based primer on the surface of the object is combined with the water transfer printing membrane with a multi-color water-based ink printing pattern to make the surface of the object attach a pattern.

In a preferred embodiment, the modified water-based ink is modified polyurethane comprising hydroxyl, sulfonate and isocyanate groups, and the water-based primer is modified polyurethane comprising hydroxyl and isocyanate groups.

The water transfer printing membrane comprising:
A water-soluble film;
A multi-color water-based ink printing pattern formed on the water-soluble film; and
A metal nanoparticle layer formed on the multi-color water-based ink printing pattern.

In a preferred embodiment, the method further comprising: cleaning the surface of the object to which the pattern is attached, then blowing and baking the surface of the object.

In a preferred embodiment, the method further comprising: spraying protective paint and/or topcoat on the surface of the object after baking.

Preferably, the environmentally friendly water transfer printing method, further comprising steps:
(1): Pre-treatment of a surface of an object;
(2): Applying water-based primer to the surface of the object;
(3): Placing a water transfer printing membrane with a multi-color water-based ink printing pattern on a water surface, and performing the water transfer printing on the object to make the surface of the object attach a pattern.

In a preferred embodiment, a water temperature during the water transfer printing in the step (3) is 25°C to 30°C.

In a preferred embodiment, the method further comprising steps:
(4): soaking the surface of the object with hot water for 5 minutes, in which the water temperature is between 45°C and 50°C;
(5): Cleaning with water under pressure and blow off the surface water stains;
(6): Drying the object above 50°C until the water completely evaporates;
(7): Spraying protective paint and/or topcoat.

The present application provides a surface structure of a component, comprising a primer layer, a multi-color water-based ink printing pattern layer, and a metal nanoparticle layer which are sequentially arranged on a surface of the component.

In a preferred embodiment, the structure further comprising a protective paint layer provided on an outer surface of the metal nanoparticle layer.

In a preferred embodiment, the primer layer is a water-based primer layer.

In a preferred embodiment, the surface of the component has a regular geometric profile or an irregular stereoscopic curved surface.

According to the environmentally friendly water transfer printing method of the present invention, no activator (a mixed solvent of multiple solvents, or multiple mixed solvents) is used, the VOC discharge is 0, and it can be directly coated on the surface of the subject to quickly form a pattern on the surface of the subject; even if the surface of the subject is uneven, a pattern with a uniform thickness can be formed.

The environmentally friendly water transfer printing method and a corresponding surface structure of a component according to the present invention, wherein modified water-based ink is used in the water transfer printing membrane during the water transfer printing, so that the water-soluble film absorbs water and the modified water-based ink swells to a transferable state, then the water transfer printing membrane can be combined with the primer on the surface of the subject to make the attachment stronger. No activator, which is a mixed solvent of multiple solvents or multiple mixed solvents, is used during the method, so there is no VOC discharge.

## Claims

1. An environmentally friendly water transfer printing method, comprising:
Applying water-based primer to a surface of a subject;
Using a modified water-based ink multi-color printing pattern comprised within a water transfer printing membrane comprising a water-soluble film, and a metal nanoparticle layer, the modified water-based ink multi-color printing pattern formed on the water-soluble film, and the metal nanoparticle layer formed on the modified multi-color water-based ink printing pattern, so that the water-soluble film absorbs water and dissolves to swell the modified water-based ink to a transferable state, and the water-based primer is combined with the modified water-based ink to attach a pattern to the surface of the object.

2. The environmentally friendly water transfer printing method according to claim 1, wherein the modified water-based ink is modified polyurethane comprising hydroxyl, sulfonate and isocyanate groups, and the water-based primer is modified polyurethane comprising hydroxyl and isocyanate groups.

3. The environmentally friendly water transfer printing method according to claim 1, wherein the method further comprising: cleaning the surface of the object to which the pattern is attached, then blowing and baking the surface of the object.

4. The environmentally friendly water transfer printing method according to claim 3, wherein the method further comprising: spraying protective paint and/or topcoat on the surface of the object after baking.

5. The environmentally friendly water transfer printing method according to any of the preceding claims, further comprising steps:
(1): Pre-treatment of a surface of an object; prior to
(2): Applying water-based primer to the surface of the object;
(3): Placing a water transfer printing membrane with multi-color water-based ink printing pattern on a water surface, and performing the water transfer printing on the object to make the surface of the object attach with a pattern.

6. The environmentally friendly water transfer printing method according to claim 5, wherein a water temperature during the water transfer printing in the step (3) is 25°C to 30°C.

7. The environmentally friendly water transfer printing method according to claim 6, wherein the method further comprising steps:
(4): soaking the surface of the object with hot water for 5 minutes, in which the water temperature is between 45°C and 50°C;
(5): Cleaning with water under pressure and blow off the surface water stains;
(6): Drying the object above 50°C until the water completely evaporates;
(7): Spraying protective paint and/or topcoat.

8. A surface structure of a component printed with a printing method according to any of the preceding claims, comprising a primer layer, a multi-color water-based ink printing pattern layer, and a metal nanoparticle layer which are sequentially arranged on a surface of the component.

9. The surface structure of a component according to claim 8, wherein the structure further comprising a protective paint layer provided on an outer surface of the metal nanoparticle layer.

10. The surface structure of a component according to claim 8, wherein the primer layer is a water-based primer layer.

11. The surface structure of a component according to claim 8, wherein the surface of the component has a regular geometric profile or an irregular stereoscopic curved surface.

## Patentansprüche

1. Umweltfreundliches Wassertransferdruckverfahren, umfassend:
Auftragen einer Grundierung auf Wasserbasis auf eine Oberfläche eines Gegenstands;
Verwenden eines Mehrfarbendruckmusters mit modifizierter Tinte auf Wasserbasis, das in einer Wassertransferdruckmembran enthalten ist, die einen wasserlöslichen Film und eine Metallnanopartikelschicht umfasst, wobei das Mehrfarbendruckmuster mit modifizierter Tinte auf Wasserbasis auf dem wasserlöslichen Film ausgebildet ist und die Metallnanopartikelschicht auf dem Mehrfarbendruckmuster mit modifizierter Tinte auf Wasserbasis ausgebildet ist, so dass der wasserlösliche Film Wasser absorbiert und sich auflöst, um die modifizierte Tinte auf Wasserbasis in einen übertragbaren Zustand aufzuquellen, und die Grundierung auf Wasserbasis mit der modifizierten Tinte auf Wasserbasis kombiniert wird, um ein Muster auf der Oberfläche des Gegenstands anzubringen.

2. Umweltfreundliches Wassertransferdruckverfahren nach Anspruch 1, wobei die modifizierte Tinte auf Wasserbasis ein modifiziertes Polyurethan ist, das Hydroxyl-, Sulfonat- und Isocyanatgruppen umfasst, und der Primer auf Wasserbasis ein modifiziertes Polyurethan ist, das Hydroxyl- und Isocyanatgruppen umfasst.

3. Umweltfreundliches Wassertransferdruckverfahren nach Anspruch 2, wobei das Verfahren ferner umfasst: Reinigen der Oberfläche des Gegenstands, an dem das Muster angebracht wird, dann Abblasen und Brennen der Oberfläche des Gegenstands.

4. Umweltfreundliches Wassertransferdruckverfahren nach Anspruch 3, wobei das Verfahren ferner umfasst: Aufsprühen von Schutzfarbe und/oder Decklack auf die Oberfläche des Gegenstandes nach dem Brennen.

5. Umweltfreundliches Wassertransferdruckverfahren nach einem der vorhergehenden Ansprüche, das ferner folgende Schritte umfasst:
(1): Vorbehandeln einer Oberfläche eines Gegenstands; vor
(2): Aufbringen einer Grundierung auf Wasserbasis auf die Oberfläche des Gegenstands;
(3): Platzieren einer Wassertransferdruckmembran mit einem Mehrfarbendruckmusters mit Tinte auf Wasserbasis auf einer Wasseroberfläche und Durchführen des Wassertransferdrucks auf dem Gegenstand, um die Oberfläche des Gegenstands mit einem Muster zu versehen.

6. Umweltfreundliches Wassertransferdruckverfahren nach Anspruch 5, wobei die Wassertemperatur während des Wassertransferdrucks in Schritt (3) 25 °C bis 30 °C beträgt.

7. Umweltfreundliches Wassertransferdruckverfahren nach Anspruch 6, wobei das Verfahren ferner folgende Schritte umfasst:
(4): Tränken der Oberfläche des Gegenstands mit heißem Wasser über 5 Minuten, wobei die Wassertemperatur zwischen 45 °C und 50 °C liegt;
(5): Reinigen mit Wasser unter Druck und Abblasen der Oberflächenwasserflecken;
(6): Trocknen des Gegenstands bei über 50 °C, bis das Wasser vollständig verdunstet ist;
(7): Aufsprühen einer Schutzfarbe und/oder eines Decklacks.

8. Oberflächenstruktur eines Bauteils, die mit einem Druckverfahren nach einem der vorhergehenden Ansprüche gedruckt wird, umfassend eine Grundierungsschicht, eine Mehrfarben-Druckmusterschicht mit Tinte auf Wasserbasis und eine Metallnanopartikelschicht, die nacheinander auf einer Oberfläche des Bauteils angeordnet werden.

9. Oberflächenstruktur eines Bauteils nach Anspruch 8, wobei die Struktur ferner eine Schicht Schutzfarbe umfasst, die auf einer äußeren Oberfläche der Metallnanopartikelschicht vorgesehen ist.

10. Oberflächenstruktur eines Bauteils nach Anspruch 8, wobei die Grundierungsschicht eine Grundierungsschicht auf Wasserbasis ist.

11. Oberflächenstruktur eines Bauteils nach Anspruch 8, wobei die Oberfläche des Bauteils ein regelmäßiges geometrisches Profil oder eine unregelmäßige stereoskopisch gekrümmte Oberfläche aufweist.

## Revendications

1. Procédé d'impression par transfert d'eau respectueux de l'environnement, comprenant :
l'application d'un apprêt à base d'eau sur la surface d'un sujet ;
l'utilisation d'un motif d'impression multicolore à encre à base d'eau modifiée compris dans une membrane d'impression par transfert d'eau comprenant un film soluble dans l'eau et une couche de nanoparticules métalliques, le motif d'impression multicolore à encre à base d'eau modifiée étant formé sur le film soluble dans l'eau et la couche de nanoparticules métalliques étant formée sur le motif d'impression multicolore à encre à base d'eau modifiée, de sorte que le film soluble dans l'eau absorbe l'eau et se dissout pour faire gonfler l'encre à base d'eau modifiée jusqu'à un état transférable, et l'apprêt à base d'eau étant combiné à l'encre à base d'eau modifiée pour fixer un motif à la surface de l'objet.

2. Procédé d'impression par transfert d'eau respectueux de l'environnement selon la revendication 1,
dans lequel l'encre à base d'eau modifiée est un polyuréthane modifié comprenant des groupes hydroxyle, sulfonate et isocyanate, et l'apprêt à base d'eau est un polyuréthane modifié comprenant des groupes hydroxyle et isocyanate.

3. Procédé d'impression par transfert d'eau respectueux de l'environnement selon la revendication 1,
dans lequel le procédé comprend en outre : le nettoyage de la surface de l'objet auquel le motif est attaché, puis le soufflage et la cuisson de la surface de l'objet.

4. Procédé d'impression par transfert d'eau respectueux de l'environnement selon la revendication 3,
dans lequel le procédé comprend en outre : la pulvérisation d'une peinture protectrice et/ou d'une couche de finition sur la surface de l'objet après la cuisson.

5. Procédé d'impression par transfert d'eau respectueux de l'environnement selon l'une quelconque des revendications précédentes, comprenant en outre les étapes suivantes :
(1) : le prétraitement d'une surface d'un objet ; avant
(2) : l'application d'un apprêt à base d'eau sur la surface de l'objet ;
(3) : le placement d'une membrane d'impression par transfert d'eau avec un motif d'impression à l'encre à base d'eau multicolore sur une surface d'eau, et la réalisation de l'impression par transfert d'eau sur l'objet pour attacher la surface de l'objet avec un motif.

6. Procédé d'impression par transfert d'eau respectueux de l'environnement selon la revendication 5,
dans lequel la température de l'eau pendant l'impression par transfert d'eau à l'étape (3) est comprise entre 25°C et 30°C.

7. Procédé d'impression par transfert d'eau respectueux de l'environnement selon la revendication 6,
dans lequel le procédé comprend en outre les étapes suivantes :
(4) : le trempage de la surface de l'objet dans de l'eau chaude pendant 5 minutes, la température de l'eau étant comprise entre 45°C et 50°C ;
(5) : le nettoyage à l'eau sous pression et le soufflage des taches d'eau en surface ;
(6) : le séchage de l'objet à une température supérieure à 50°C jusqu'à ce que l'eau s'évapore complètement ;
(7) : l'application d'une peinture de protection et/ou d'une couche de finition.

8. Structure de surface d'un composant imprimé avec un procédé d'impression selon l'une quelconque des revendications précédentes, comprenant une couche d'apprêt, une couche de motif d'impression à l'encre à base d'eau multicolore et une couche de nanoparticules métalliques qui sont disposées de manière séquentielle sur une surface du composant.

9. Structure de surface d'un composant selon la revendication 8,
dans laquelle la structure comprend en outre une couche de peinture protectrice sur une surface extérieure de la couche de nanoparticules métalliques.

10. Structure de surface d'un composant selon la revendication 8,
dans laquelle la couche d'apprêt est une couche d'apprêt à base d'eau.

11. Structure de surface d'un composant selon la revendication 8,
dans laquelle la surface du composant présente un profil géométrique régulier ou une surface courbe stéréoscopique irrégulière.
